# EUROPEAN PATENT APPLICATION

(11) **EP 0 708 281 A1**
(43) Date of publication of application: **24.04.1996**
(21) Application number: 95116276.7
(22) Date of filing: 16.10.1995
(51) Int. Cl.: F16K 1/30, F17C 13/04

(54) **Valve for high-pressure cylinders with device for maintaining a residual pressure upon emptying**

(30) Priority: 20.10.1994 IT MI942153
(71) Applicant: PARTECA S.r.l., I-25010 Ponte San Marco Di Calcinato (Brescia) (IT)
(72) Inventor: Cavagna, Carlo, I-25011 Calcinato (Brescia) (IT)
(74) Representative: Modiano, Guido, Dr.-Ing.

(57) **Abstract**

A valve for high-pressure cylinders with a device for maintaining a residual pressure upon emptying, which comprises a body (1) provided with a tang (2) for coupling to a cylinder and with a delivery port (3). A knob (25) is associated with the body (1) and operates a stopper (10) that controls the connection between the tang (2) and the port (3). The device comprises, on the stopper (10), a gasket (11) for maintaining a residual pressure when the cylinder is emptied and a sleeve (30) for limiting the opening of the stopper; the sleeve (30) is controlled by a tamper-evident seal (40) that can be broken for the passage of the stopper (10) from the open position to the cylinder filling position.

## Description

The present invention relates to a valve for high-pressure cylinders with a device for maintaining a residual pressure upon emptying.

It is known that with high-pressure cylinders, particularly for so-called industrial gases, when the cylinder is to be refilled it is necessary to be sure that contaminants have not penetrated inside the cylinder. With conventional valves, there is no assurance that the valve has always remained closed during the storage of the cylinder, since any undue opening may cause the introduction of contaminants; accordingly, with this type of valve it was necessary to perform reconditioning before filling.

In order to solve the above-mentioned problem, valves have already been provided which are structured so as to maintain a given residual pressure inside the cylinder when it is emptied, so that it is not possible to introduce contaminants.

However, these valves do not allow to check that the cylinder has not been subjected to undue filling operations or to fraudulent contaminations, so that in this case, too, there is no absolute certainty that the cylinder is free from contaminants when it is to be filled.

The aim of the invention is to solve the above described problem by providing a valve for high-pressure cylinders with a device for maintaining a residual pressure upon emptying, which allows to clearly indicate externally the integrity of said valve, so that it is certain that a given residual pressure of gas has remained inside the cylinder and that said cylinder has not been subjected to other unauthorized filling operations or to fraudulent introduction of contaminants.

Within the scope of the above aim, a particular object of the invention is to provide a valve for high-pressure cylinders that while having considerably improved features, can be refilled with the standards already in use in any filling center.

Another object of the present invention is to provide a valve in which there is a tamper-evident seal that, if broken, clearly indicates that said cylinder may have been contaminated, thus making reconditioning necessary only in this case.

Another object of the present invention is to provide a valve for high-pressure cylinders that is capable of giving the greatest assurances of reliability and safety in use by virtue of its particular constructive features.

This aim, these objects, and others which will become apparent hereinafter are achieved by a valve for high-pressure cylinders with a device for maintaining a residual pressure upon emptying, according to the invention, which comprises a body provided with a tang for coupling to a cylinder and with a delivery port, a knob being associated with said body, said knob operating a stopper that controls the connection between said tang and said port; characterized in that it comprises, on said stopper, means for maintaining a residual pressure when said cylinder is emptied and means for limiting the opening stroke of said stopper, said means being controlled by a tamper-evident seal breakable for the passage of said stopper from the open position to the position for filling said cylinder.

Further characteristics and advantages will become apparent from the description of a preferred but not exclusive embodiment of a valve for high-pressure cylinders with a device for maintaining a residual pressure upon emptying, illustrated only by way of non-limitative example in the accompanying drawings, wherein:
figure 1 is a schematic sectional view of the valve for high-pressure cylinders, according to the invention, in the open position for normal use;
figure 2 is a schematic exploded view of the means for limiting the opening stroke of the stopper;
figures 3a and 3b are respectively a schematic perspective view and a partially sectional plan view of the tamper-evident seal;
figures 4 and 5 are sectional views of the fastening means of the tamper-evident seal, respectively in open position and in closed position;
figure 6 is a schematic view, from one end, of the coupling seat located at the end of the tamper-evident seal;
figure 7 is a view of the seat located at the end of the tamper-evident seal, showing the closure element in cross-section;
figure 8 is a schematic sectional view, taken along the plane VIII-VIII of figure 1;
figure 9 is a view of the tamper-evident seal after breaking it to open the cylinder for filling;
figure 10 is a sectional view of the valve in the filling position;
figure 11 is a partially exploded perspective view of the cap of a further embodiment of the stroke limiting means;
figure 12 is a sectional view of the cap, taken along the plane XII-XII of figure 15, in the position for using the cylinder;
figure 13 is a sectional view of the cap in the filling position;
figure 14 is a sectional view of the valve in the position for its use;
figure 15 is a sectional view, taken along the plane XV-XV of figure 14;
figure 16 is a sectional view of the valve in the filling position;
figure 17 is a sectional view, taken along the plane XVII-XVII of figure 16.

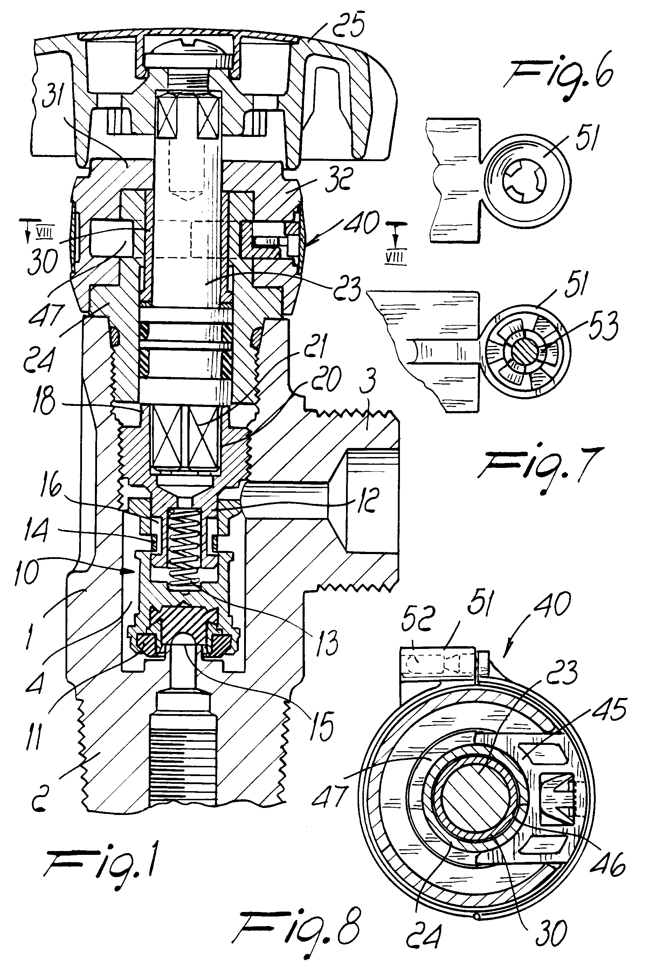

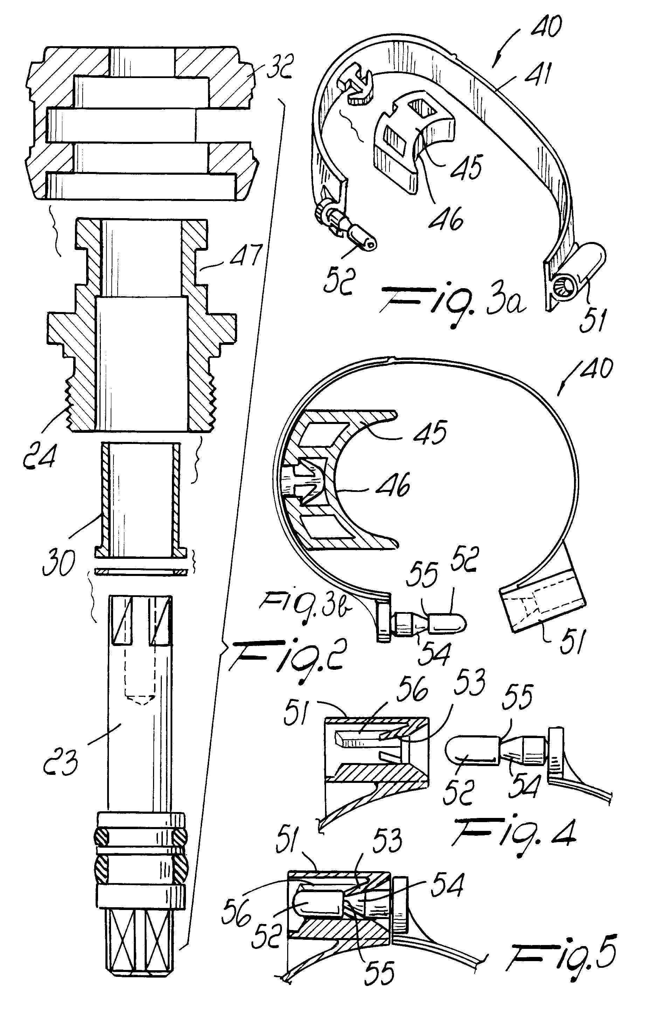

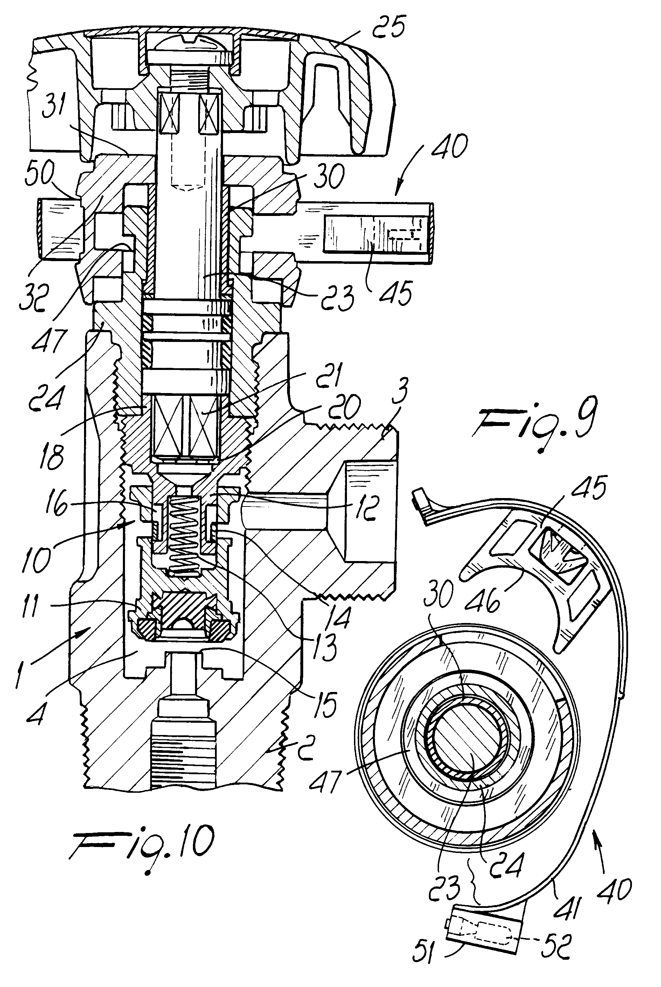

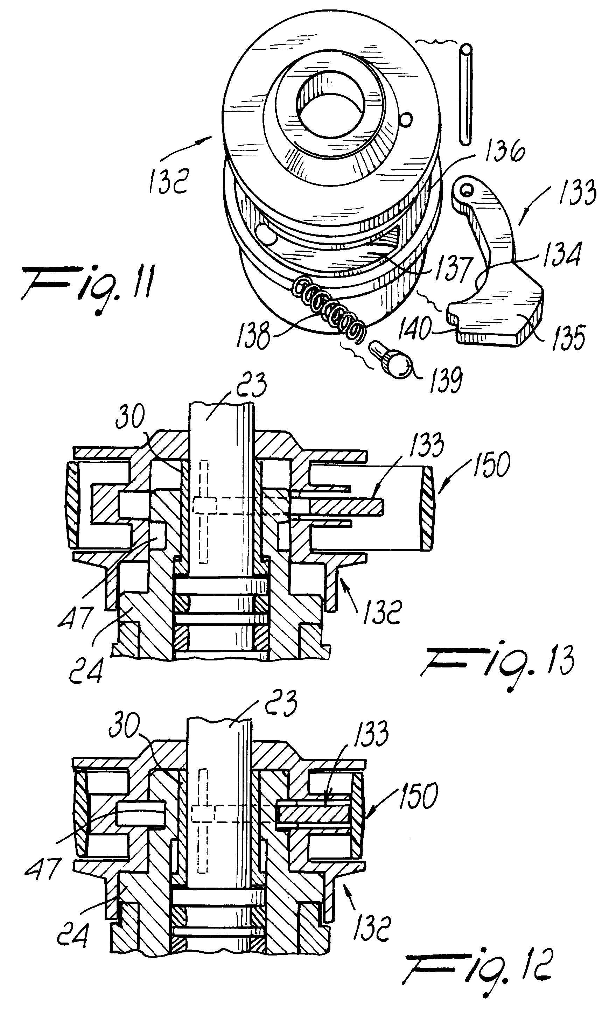

With reference to figures 1 to 10, the valve for high-pressure cylinders with device for maintaining a residual pressure upon emptying, according to the invention, comprises a body 1 provided with a tang 2, which can be applied to a cylinder, and with a delivery port 3.

A connection chamber 4 is formed inside the body 1, and a stopper, generally designated by the reference numeral 10, acts in said chamber and controls the connection between the opening 15 of the tang 2 and the port 3.

The stopper 10 has a gasket body 11 that is connected to the body 12 of the stopper through interposition of a pusher spring 13 and of stroke limiting elements that are constituted by a fork 14, which is supported by the gasket body 11 and engages in a recess 16 formed on the body 12 to limit the stroke and allows to obtain, when the valve is in the open position, a pressure that can be preset according to the type of spring used; this pressure can be overcome by the gas contained in the cylinder during normal use.

It should also be added that the gasket body 11 is peripherally provided with polygonal shapes that engage in a corresponding seat formed by the chamber 4 to prevent the rotation of the gasket body 11, limiting the wear of said gasket.

The spring 13 is set so that a residual pressure is maintained inside the cylinder when it is emptied.

The stopper body 12 forms a polygonal hollow 20 in which a polygonal tang 21 slidingly engages; said tang 21 is connected to the end of an actuation stem 23 that is easily hermetically supported by a ring 24 that is hermetically screwed onto the body 1.

An actuation knob 25 is connected to the stem 23, which protrudes hermetically from the ring 24; said knob actuates the stopper body 12, which rotates rigidly with the stem 23.

An important feature of the invention is the fact that it comprises means for limiting the stroke during opening; said means are constituted by a sleeve 30 that surrounds the stem 23 and can engage by abutment, during opening and closing, the bottom 31 of a cap 32 that surrounds the ring 24.

The cap 32 is retained in position by a tamper-evident seal, generally designated by the reference numeral 40, which is constituted by a strap 41 that supports a block 45 which can be formed monolithically with said strap or can be an element that is applied in a snap-together manner and is made of a material that is more rigid than the strap.

The block 45 forms, at its free end, a concave region 46 that fits in an annular groove 47 formed by the ring 24.

The strap 41 can be accommodated in a hollow or recess 50 formed on the outer surface of the cap 32 and is provided, at its ends, with fastening means that are advantageously constituted by a coupling seat 51, in which a pin 52, provided at the other end of the strap, is inserted.

In order to prevent disengagement, the coupling seat 51 is provided with elastic tabs 53 which, when insertion has been achieved, are accommodated in a recess 54 of the pin 52 and engage against the abutment 55, which is formed at the end of the recess, so that it is not possible to extract the pin once it has been inserted.

It should also be added that guiding spacers 56 are provided in the seat 51 outside the elastic tabs 53 and act as centering element for the pin.

When the tamper-evident seal 40 is intact, the block 45 is inserted in the groove 47, preventing the translatory motion of the sleeve 30.

During normal use, by acting on the knob 25 the valve is opened, turning the stem and causing the upward translatory motion of the stopper body 12 until its central lip, designated by the reference numeral 18, engages against the ends of the stem 23, which cannot move since it is retained in position by the sleeve 30, which abuts against the bottom 31 of the cap 32.

In this open condition, the pressure inside the cylinder overcomes the set pressure of the spring 13, allowing delivery of the contents until, upon emptying, inside the cylinder there is only a residual pressure that is unable to overcome the contrast of the spring 13, which consequently retains the gasket body 11 so that it closes the opening 15.

In order to perform filling, it is necessary to open the opening 15 and it is therefore necessary to perform a further stroke of the stopper body 12.

In order to perform this additional stroke, it is necessary to break the tamper-evident seal 40, so as to remove the block 45 from the groove 47.

By cutting the strap 41, as shown schematically in figure 9, the block 45 is removed, consequently allowing to continue the rotation of the knob 25, since translatory motion of the stem 23 becomes possible; as rotation continues, the central lip 18 in fact pushes upward, relative to the drawings, the stem 23, which can slide because the sleeve 30 pushes upward the cap 32, which is now free to move, since the block 45 has been removed from the annular groove 47.

Only in these conditions is it possible to fill the cylinder, but these conditions can only be achieved by breaking the tamper-evident seal 40, so that it is externally evident that the tamper-evident seal has been removed.

In practical use, therefore, at the filling center, when cylinders with an intact tamper-evident seal arrive, it is certain that a given residual pressure has remained inside the cylinder and that the inside of the cylinder cannot have been connected to the outside; therefore no reconditioning operation is required and the filling center can remove the tamper-evident seal and perform filling directly.

If tampering has occurred, the tamper-evident seal is missing and it is immediately possible to check from outside that the cylinder requires reconditioning.

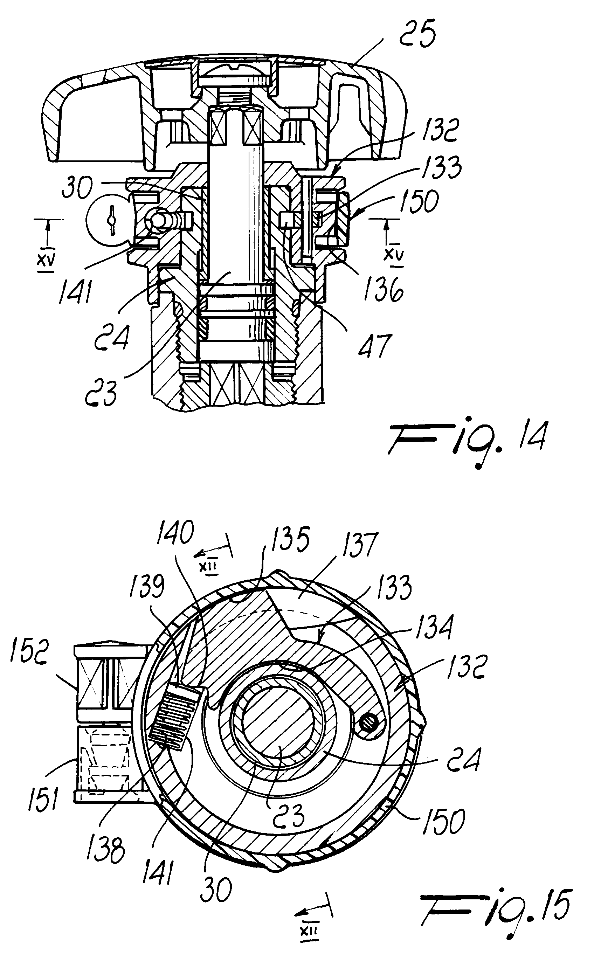

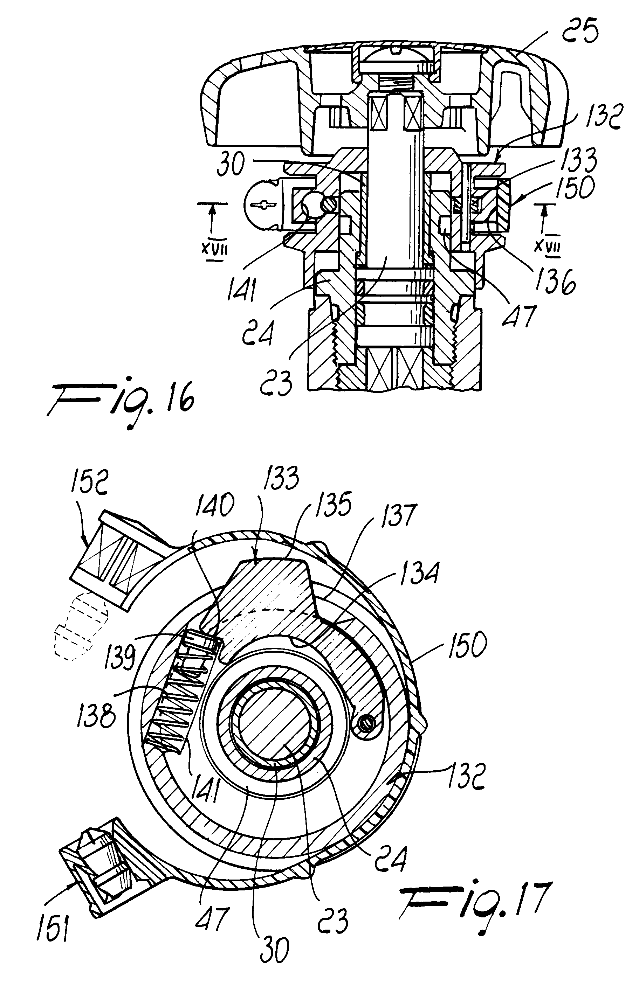

With reference to figures 11 to 17, said figures illustrate a further embodiment of the stroke limiting means, which are substantially constituted by a cap, generally designated by the reference numeral 132, that supports an oscillating pawl 133 that is pivoted, parallel to the axis of the ring 24, at its end, and has, at its other end, an internal concave region 134 that can be inserted in the annular groove 47 of the ring 24 and has, on the opposite side, a protrusion 135 that protrudes into a circumferential recess 136 that is formed by the cap 132.

The pawl 133 is in practice accommodated in a slot 137 formed at the recess.

There is also a pusher spring 138 that acts on a pusher 139 that couples to an abutment 140 of the pawl 133, whereas the spring 138 acts on the bottom of a hollow 141 formed inside the cap.

In order to retain the cap in position, there is a tamper-evident strap, generally designated by the reference numeral 150, that fits in the hollow 136 and, by acting on the protrusion 135, in practice causes the retraction of the pawl 133, in contrast with the action of the spring 138, causing the internal concave region 134 to engage the annular groove.

The tamper-evident strap 150 has a coupling seat 151 at one of its ends and, at the other end, a pin 152, which are conceptually similar to the ones described for the embodiment of figures 1 to 10.

With the described arrangement, in normal operating conditions the strap 150 retains the pawl 133, making it contract radially in contrast with the spring 138, so that the internal concave region 134 enters the annular groove 47 of the ring 24, consequently limiting the opening stroke of the stem 23.

In order to perform filling, in this case also it is necessary to remove the tamper-evident strap 150 by breaking the couplings 151 and 152, and consequently causing exit of the protrusion of the pawl 133 by virtue of the action of the spring 138 and its disengagement from the groove 147, so that moving the gasket body 11 away from the opening 15 becomes possible.

In practice, the operation is fully similar to what has been described earlier on.

It should also be added that the actuation knob 25 cannot be removed freely, since there is a panel for covering the coupling screw of the knob 25 that must be broken to achieve fraudulent access to the inside of the cylinder.

From the above description it is therefore evident that the invention achieves the intended aim and objects, and in particular the fact is stressed that a valve for a high-pressure cylinder with device for maintaining a residual pressure upon emptying is provided which, by means of a tamper-evident seal, which breaks upon filling, preventing reuse of said seal, ensures that the cylinder does not contain contaminants, so that reconditioning is not necessary; vice versa, if the tamper-evident seal is not correctly in place, since it has been broken, it is straightforward to note that the cylinder must be reconditioned.

The invention thus conceived is susceptible of numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Valve for high-pressure cylinders with device for maintaining a residual pressure upon emptying, which comprises a body (1) provided with a tang (2) for coupling to a cylinder and with a delivery port (3), a knob (25) being associated with said body (1), said knob (25) operating a stopper (10) that controls the connection between said tang (2) and said port; characterized in that it comprises, on said stopper (10), means (11) for maintaining a residual pressure when said cylinder is emptied and means (30) for limiting the opening stroke of said stopper (10), said means (30) being controlled by a tamper-evident seal (40,150) breakable for the passage of said stopper (10) from the open position to the position for filling said cylinder.

2. Valve according to claim 1, characterized in that said means for maintaining a residual pressure are constituted by a gasket body (11) that is connected to the body of the stopper (10) through interposition of a pusher spring (13) that can be set to the residual pressure value.

3. Valve according to the preceding claims, characterized in that it comprises stroke limiting elements (30) that act between said gasket body (11) and said stopper body (10).

4. Valve according to one or more of the preceding claims, characterized in that said opening stroke limiting means comprise a sleeve (30) that surrounds the stem (23) of the stopper (10) and can engage, by abutment, when the valve is in closed and open position, the bottom (31) of a cap (32,132) that surrounds the ring (24) that hermetically supports said stem (23) and is connected to said valve body (1), a block (45) being also provided, said block (45) being detachably insertable in an annular groove (47) of said ring (24) and being supported by a strap (41) that constitutes said tamper-evident seal (40).

5. Valve according to one or more of the preceding claims, characterized in that said strap (41) is accommodated in a hollow (50) formed by said cap (32).

6. Valve according to one or more of the preceding claims, characterized in that it comprises means for fastening said strap which are constituted by a coupling seat (51) that is connected to one end of the strap (41) and by an insertion pin (52) that is associated with the other end of said strap (41).

7. Valve according to one or more of the preceding claims, characterized in that said coupling seat (51) has elastic tabs (53) that can be accommodated in a recess (54) formed by said pin (52) and can abut against an abutment (55) formed at the end of said recess (54).

8. Valve according to one or more of the preceding claims, characterized in that said stopper body (10) has a central lip (18) that can engage the end of said stem (23), during the opening of said cylinder, the stroke of said stem (23) being limited by the engagement of said sleeve (30) against said bottom (31) of said cap (32).

9. Valve according to one or more of the preceding claims, characterized in that the removal of the tamper-evident seal (40), by cutting the fastening means (51,52), allows the disengagement of said block (45) from said annular groove (47), with the possibility of a further stroke for said stem (23), said gasket body (11) passing to the filling position, spaced from the connecting opening (15) formed by said tang (2).

10. Valve according to one or more of the preceding claims, characterized in that said cap (132) that surrounds said ring (24) that hermetically supports said stem (23) internally supports, so that it can oscillate, a pawl (133) that is adapted to detachably engage said annular groove (47) of said ring (24).

11. Valve according to one or more of the preceding claims, characterized in that said pawl (133) has, at the end that lies opposite to the pivoting end, an internal concave region (134) that can be inserted detachably in said annular groove (47), and has, on the opposite side, a protrusion (135) that can be engaged by a tamper-evident strap (150) that is adapted to overcome the elastic thrusting action applied by a pusher spring (138) that acts at the free end of said pawl (133).

12. Valve according to one or more of the preceding claims, characterized in that said tamper-evident strap (150) has, at its ends, fastening means that are constituted by a coupling seat (151) located at a first end of said strap and by an insertion pin (152) that is associated with the other end of said strap (150).
